**Europäisches Patentamt**

**European Patent Office**

**Office européen des brevets**

(19)

(11) Veröffentlichungsnummer: **0 196 664**
**B1**

(12) # EUROPÄISCHE PATENTSCHRIFT

(45) Veröffentlichungstag der Patentschrift:
**31.05.89**

(51) Int. Cl.⁴: **B 60 S 1/48**

(21) Anmeldenummer: **86104487.3**

(22) Anmeldetag: **02.04.86**

(54) Scheibenwaschvorrichtung für Kraftfahrzeuge.

(30) Priorität: **03.04.85 DE 3512108**

(43) Veröffentlichungstag der Anmeldung:
**08.10.86 Patentblatt 86/41**

(45) Bekanntmachung des Hinweises auf die Patenterteilung:
**31.05.89 Patentblatt 89/22**

(84) Benannte Vertragsstaaten:
**AT FR GB SE**

(56) Entgegenhaltungen:
**DE-A-2 909 220**
**DE-A-3 323 004**
**FR-A-1 460 494**
**GB-A-1 451 666**
**US-A-3 716 886**

(73) Patentinhaber: **BAYERISCHE MOTOREN WERKE**
**Aktiengesellschaft, Postfach 40 02 40 Petuelring**
**130 - AJ- 36, D-8000 München 40 (DE)**

(72) Erfinder: **Hagen, Hans, Dr., Adalbertstrasse 10,**
**D-8000 München 40 (DE)**

(74) Vertreter: **Bullwein, Fritz, Bayerische Motoren**
**Werke Aktiengesellschaft Postfach 40 02 40**
**Petuelring 130 AJ- 33, D-8000 München 40 (DE)**

EP 0 196 664 B1

**Beschreibung**

Die Erfindung bezieht sich auf eine Scheibenwaschvorrichtung nach dem Oberbegriff des Patentanspruchs 1.

Eine derartige Vorrichtung ist aus der FR-A-1 460 494 bekannt. Dabei sind zwei Pumpen erforderlich, um jeweils einen Kreislaufbetrieb der Waschflüssigkeit mit geringem oder zu vernachlässigendem Systemdruck aufrechtzuerhalten bzw. im Bedarfsfall einen erhöhten Spritzdruck zu erzeugen, bei dem Waschflüssigkeit tatsächlich aus der Spritzdüse bzw. den Spritzdüsen austritt. Der niedrige Systemdruck wird mit Hilfe der Heizeinrichtung erzeugt, die das Waschwasser erwärmt und nach Art einer Thermosyphon-Strömung im Kreislaufsystem zirkulieren läßt. Bei der Pumpe für den Spritzdruck handelt es sich um eine mechanisch betätigbare Druckpumpe, die jeweils nur eine definierte Waschwassermenge fördert und jedesmal von neuem in Ihre Ausgangslage zurückgestellt werden muß.

Gegenüber der bekannten Vorrichtung besteht die Aufgabe der Erfindung darin, eine Scheibenwaschvorrichtung der eingangs genannten Art zu schaffen, die auf einfache und zuverlässige Weise aufgebaut ist und die beiden für den Betrieb erforderlichen Drucke liefert.

Diese Aufgabe ist gelöst durch die Mittel, die im kennzeichnenden Teil des Patentanspruchs 1 angegeben sind.

Es ist somit lediglich eine einzige Pumpe erforderlich, um die beiden Druckwerte zu liefern. Mit Hilfe dieser Pumpe ist es möglich, den Spritzdruck solange unverändert aufrechtzuerhalten, wie dies gewünscht ist. Damit verbunden ist eine gleichmäßige Förderung der Waschflüssigkeit über die Spritzdüsen auf die zu reinigende Fläche solange, wie dies erforderlich ist. Damit ist die Reinigungsqualität gegenüber der bekannten Vorrichtung deutlich verbessert.

Eine weitere Verbesserung hat zum Ziel, den Einsatz der Erfindung auf die Fälle zu begrenzen, die sinnvoll sind. Hierzu sind die Heizeinrichtungen ggf. auch die Pumpe erst bei einer Temperatur der Waschflüssigkeit nahe ihrem Gefrierpunkt eingeschaltet Diese Temperatur wird zweckmäßigerweise im Bereich der Spritzdüse bestimmt.

Bei einer Scheibenwaschvorrichtung, die mit einem üblichen Scheibenwischer kombiniert ist, kann das Kreislaufsystem teilweise im Arm des Scheibenwischers verlaufen und die Spritzdüse ebenfalls in diesem Bereich liegen. Damit wird eine verbesserte Benetzung der Oberfläche erreicht. Gerade bei einer derartigen Anordnung bietet die Erfindung erhebliche Vorteile, da dann nicht nur die Spritzdüse, sondern sogar ein Teil der Zuführungs-Leitung exponiert ist und erheblich an Wärme verliert, sofern diese nicht wie bei der Erfindung durch die Waschflüssigkeit selbst nachgeliefert wird.

In der Zeichnung ist ein Ausführungsbeispiel der Erfindung dargestellt.

Es zeigt

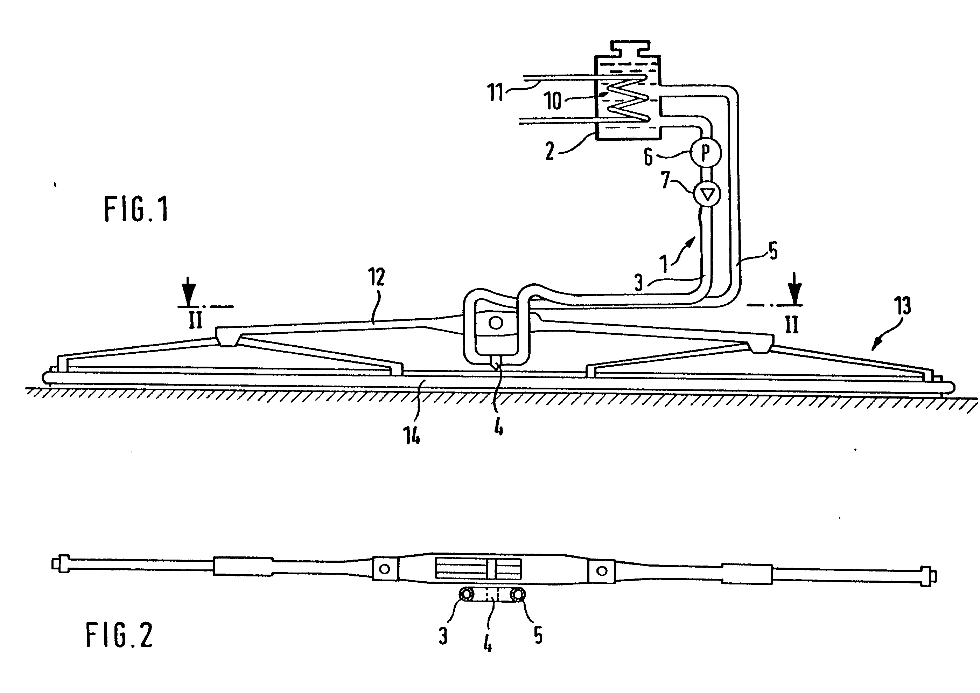

Fig. 1  eine Seitenansicht der erfindungsgemäßen Scheibenwaschvorrichtung und
Fig. 2  eine Draufsicht der Vorrichtung von Fig. 1.

Die in der Zeichnung gezeigte Scheibenwaschvorrichtung enthält ein Kreislaufsystem 1, das von einem Vorratsbehälter 2 über eine Zuführungs-Leitung 3 zu mindestens einer Spritzdüse 4 und von dieser über eine Rücklaufleitung 5 zum Vorratsbehälter 2 zurück verläuft. In der Leitung 3 befindet sich eine Pumpe 6 und ein Rückschlagventil 7. Der Vorratsbehälter 2 enthält eine Heizeinrichtung 10 in Form einer Leitung 11, die am Rücklauf eines nicht im einzelnen dargestellten Kühlmittelkreislaufs einer Brennkraftmaschine angeschlossen ist.

Die Leitung 3 und die Rücklaufleitung 5 sind an einer Bügelfeder 12 eines Scheibenwischarms 13 befestigt. Die Spritzdüse 4 ist auf das Wischblatt 14, das am Federbügel 12 befestigt ist, und damit auf die Oberfläche der zu reinigenden Windschutzscheibe gerichtet. Ihre Arbeitsweise ist derart, daß sie erst bei einem definierten Spritzdruck öffnet und damit Waschflüssigkeit austreten läßt. Die Leitung 3 und die Rücklaufleitung 5 verlaufen längs des Wischarms und sind an der Ablagestelle (nicht gezeigt) des Scheibenwischblatts 14 verlegt.

Soll die zu reinigende Oberfläche mit Waschflüssigkeit benetzt werden, so wird die Waschflüssigkeit in der Leitung 3 mit einem Spritzdruck beaufschlagt, der deutlich über dem von der Pumpe 6 erzeugten Systemdruck liegt. Die entsprechend ausgebildete Waschdüse 4 öffnet sich und gibt dann Waschflüssigkeit auf die zu reinigende Oberfläche. Dabei verhindert das Rückschlagventil 7, daß Waschflüssigkeit über die Pumpe 6 direkt in den Vorratsbehälter 2 gelangt. Eine nicht dargestellte Drossel in der Rücklaufleitungs verhindert, daß der Vorratsbehälter 2 mit Druck beaufschlagt wird.

Durch die Heizeinrichtung 10 ist die Waschflüssigkeit vorgewärmt und befindet sich auf einer Temperatur, die deutlich über dem Gefrierpunkt liegt. Durch das ständige Zirkulieren der Waschflüssigkeit im Kreislaufsystem 1 ist sichergestellt, daß dann auch die Waschflüssigkeit im gesamten Kreislaufsystem auf einer Temperatur über dem Gefrierpunkt liegt. Die Spritzdüse 4 wird damit ständig von erwärmtem Waschwasser umspült und ist jederzeit in der Lage, im Bedarfsfall Waschflüssigkeit auf die zu reinigende Oberfläche abzugeben.

Durch das zusätzliche Verlegen der Leitungen 3 und 5 im Ablagebereich des Wischblatts 14 ist zudem erreicht, daß das Wischblatt 14 stets, d.h. auch bei tiefen Temperaturen, aus diesem Ablagebereich ausfahren kann und die jeweilige Oberfläche reinigen kann. Damit ist die Funktionssicherheit der gesamten Reinigungsanlage inkl. der Waschvorrichtung auch bei extrem tiefen Temperaturen sichergestellt.

Sofern die Außentemperaturen deutlich über dem Gefrierpunkt liegen, können durch eine entsprechende Steuerung die Pumpe 6 und die Heizeinrichtung 10 ausgeschaltet werden. Die Außentemperatur kann beispielsweise mit Hilfe eines Temperatursensors, der z. B. in einer Klimaanlage ohnehin bereits vorhanden ist, festgestellt werden. Alternativ dazu kann der Temperatursensor auch die Temperatur der Waschflüssigkeit selbst bestimmen. Hierzu kann er beispielsweise in der Leitung 3 nahe der Spritzdüse 4 angeordnet sein.

Die Funktion des Druckerzeugers wird durch die Pumpe 6 erzeugt. Hierzu läuft diese mit 2 Geschwindigkeiten laufen. Bei der kleineren Geschwindigkeit wird nur der Systemdruck, bei der größeren Geschwindigkeit der Spritzdruck erzeugt.

## Patentansprüche

1. Scheibenwaschvorrichtung für Kraftfahrzeuge, mit einem Kreislaufsystem für Waschflüssigkeit, das enthält:
   - eine Heizeinrichtung (10) zum Erwärmen der Waschflüssigkeit,
   - einen Vorratsbehälter (2) für die Waschflüssigkeit,
   - eine einer Spritzdüse (4) zugeordnete Leitung (3) zum Zuführen der Waschflüssigkeit zu der Spritzdüse (4),
   - eine Rücklaufleitung (5), über welche die Waschflüssigkeit von der Spritzdüse (4) zum Vorratsbehälter (2) zurück verläuft, und
   - einen Druckerzeuger,
   dadurch gekennzeichnet, daß der Druckerzeuger durch eine Pumpe (6) mit zwei Geschwindigkeiten gebildet ist, welche bei der kleineren Geschwindigkeit die Waschflüssigkeit unter einem Systemdruck in Umlauf bringt und im Bedarfsfall bei der größeren Geschwindigkeit die Waschflüssigkeit mit einem erhöhten Splitzdruck beaufschlagt, wobei die Spritzdüse (4) erst dann diese austreten läßt.

2. Vorrichtung nach Anspruch 1, dadurch gekennzeichnet, daß die Heizeinrichtung (10) und ggf. auch die Pumpe (6) erst bei einer Temperatur der Waschflüssigkeit nahe dem Gefrierpunkt eingeschaltet sind.

3. Vorrichtung nach Anspruch 1 oder 2, dadurch gekennzeichnet, daß die Leitung (3) und die Rücklaufleitung (5) sowie die Spritzdüse (4) an einem Scheibenwischarm (13) besfestigt sind.

4. Vorrichtung nach Anspruch 3, dadurch gekennzeichnet, daß die Spritzdüse (4) auf ein am Scheibenwischarm (13) befestigtes Wischblatt (14) ausgerichtet ist.

## Claims

1. A windscreen wiper for motor vehicles comprising a circulating system for washing fluid containing:
   - a heating device (10) for heating the washing fluid,
   - a storage container (2) for the washing fluid,
   - a pipe (3) associated with a spray nozzle (4) for supplying the washing fluid to the nozzle (4),
   - a return pipe (5) through which the washing fluid returns from the spray nozzle (4) to the storage container (2), and
   - a pressure generator,
   characterised in that the pressure generator is a two-speed pump (6) which at the lower speed circulates the washing fluid at an operating pressure and, when necessary, at the higher speed acts on the washing fluid at an increased spray pressure, the only pressure at which the fluid is ejected by the nozzle (4).

2. A device according to claim 1, characterised in that the heating device (10) and, if required, the pump (6) are switched on only when the washing fluid is at a temperature near its freezing point.

3. A device according to claim 1 or 2, characterised in that the pipe (3), the pipe (5) and the spray nozzle (4) are connected to a windscreen wiper arm (13).

4. A device according to claim 3, characterised in that the spray nozzle (4) is aligned on a wiper blade (14) secured to the windscreen-wiper arm (13).

## Revendications

1. Dispositif de lavage de glaces pour véhicules automobiles avec un système de circulation pour le liquide de lavage, système comprenant:
   - un dispositif de chauffage (10) pour réchauffer le liquide de lavage,
   - un réservoir (2) pour le liquide de lavage,
   - une canalisation (3) associée à une buse d'injection (4) pour amener le liquide de lavage à cette buse d'injection (4),
   - une canalisation de retour (5) par l'intermédiaire de laquelle le liquide de lavage revient de la buse d'injection (4) au réservoir (2)
   - un générateur de pression,
   dispositif de lavage de glaces caractérisé en ce que le générateur de pression est constitué par une pompe (6) à deux vitesses, qui pour la plus petite vitesse met en circulation le liquide de lavage sous une pression de système, et qui en cas de besoin pour la plus grande vitesse, met le liquide de lavage à une pression d'injection plus élevée, à laquelle la buse d'injection (4) laisse alors seulement sortir ce liquide.

2. Dispositif selon la revendication 1, caractérisé en ce que le dispositif de chauffage (10) et éventuellement aussi la pompe (6) ne sont mis en circuit que pour une température du liquide de lavage supérieure au point de congélation.

3. Dispositif selon la revendication 1 ou 2, caractérisé en ce que la canalisation (3) et la canalisation de retour (5) ainsi que la buse d'injection (4) sont fixées sur un bras d'essuie-glaces (13).

4. Dispositif selon la revendication 3, caractérisé en ce que la buse d'injection (4) est alignée sur une raclette d'essuyage (14) fixée sur le bras d'essuie-glaces (13).

FIG.1

11
10
2
6
7
1
3
5
12
II
II
13
14
4

FIG.2

3
4
5

EP 0 196 664 B1